(19) Europäisches Patentamt
European Patent Office
Office européen des brevets

(11) **EP 2 584 671 B1**

(12) **EUROPÄISCHE PATENTSCHRIFT**

(45) Veröffentlichungstag und Bekanntmachung des Hinweises auf die Patenterteilung:
**05.08.2020   Patentblatt 2020/32**

(51) Int Cl.:
***H02K 3/28*** *(2006.01)*

(21) Anmeldenummer: **12184872.5**

(22) Anmeldetag: **18.09.2012**

(54) **Elektrische Maschine**

Electric machine

Machine électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2011   DE 102011084714**

(43) Veröffentlichungstag der Anmeldung:
**24.04.2013   Patentblatt 2013/17**

(73) Patentinhaber: **Robert Bosch GmbH**
**70442 Stuttgart (DE)**

(72) Erfinder: **Evans, Steven Andrew**
**77815 Buehl (DE)**

(56) Entgegenhaltungen:
WO-A1-2011/029235     DE-A1- 2 426 968
DE-A1- 19 905 748     DE-A1-102005 039 176
DE-A1-102007 029 157     JP-A- 2006 296 033

EP 2 584 671 B1

**Beschreibung**

Die Erfindung betrifft eine elektrische Maschine, insbesondere eine Synchronmaschine.

Stand der Technik

Elektrische Maschinen als solche sind beispielsweise aus der Offenlegungsschrift DE 10 2009 002 928 A1 oder aus der Offenlegungsschrift DE 10 2009 029 065 A1 bekannt. Sie umfassen in der Regel einen drehbar gelagerten Rotor mit Rotorpolen und einen Stator mit Statorzähnen, wobei um jeden Statorzahn jeweils eine Spule mit N Windungen gewickelt ist, wobei N eine natürliche Zahl ist.

Es ist wünschenswert, einen Herstellungsaufwand für elektrische Maschinen zu verringern.

Mit der DE 102 005 039 176 A1 ist eine elektrische Drehfeldmaschine bekannt geworden, bei der zwischen Statorzähnen, die mit einer Spule bewickelt sind, unbewickelte Hilfszähne angeordnet sind.

Ebenso zeigen die DE 199 05 748 A1, die DE 10 2007 029 157 A1 die eine elektrische Maschine nach dem Oberbegriff des Anspruchs 1 zeigt, und die JP 2006 296 033 A jeweils einen ringförmigen Stator einer elektrischen Maschine, bei dem zwischen bewickelten radialen Statorzähnen jeweils unbewickelte radiale Hilfszähne angeordnet sind.

Die WO 2011/029235 A1 beschreibt einen Stator, bei dem separat gefertigte Hilfszähne im Stator zwischen bewickelten Hauptzähnen eingefügt werden. Die DE 24 26 968 A1 offenbart einen elektrischen Linearantrieb, beispielsweise für ein magnetisches Schwebefahrzeug, bei dem das Wanderfeld über eine Stromrichteranordnung angesteuert wird.

Die der Erfindung zugrunde liegende Aufgabe kann daher darin gesehen werden, eine elektrische Maschine anzugeben, welche einfach hergestellt werden kann.

Diese Aufgabe wird mittels des Gegenstands nach Anspruch 1 gelöst. Vorteilhafte Ausgestaltungen sind Gegenstand von jeweils abhängigen Unteransprüchen.

Nach einem Aspekt wird eine elektrische Maschine, insbesondere eine Synchronmaschine, vorzugsweise eine bürstenlose elektrische Maschine, bereitgestellt. Die elektrische Maschine umfasst einen Rotor, welcher drehbar gelagert ist. Der Rotor weist mehrere Rotorpole auf, welche vorzugsweise mittels Permanentmagneten gebildet werden. Ferner ist ein Stator vorgesehen, der mehrere Statorzähne umfasst, wobei die Statorzähne den Rotorpolen zugewandt angeordnet sind.

Hierbei ist vorgesehen, dass um jeweils zwei Statorzähne der mehreren Statorzähne Windungen von jeweils einer Spule gewickelt ist, wobei zwischen den zwei Statorzähnen ein ungewickelter Statorzahn gebildet ist.

Die Erfindung umfasst also insbesondere den Gedanken, dass nicht sämtliche Statorzähne des Stators jeweils mit Windungen einer Spule versehen sind, sondern zumindest ein Statorzahn frei von Windungen bleibt.

Dadurch also, dass im Vergleich zum Stand der Technik, um jeden Statorzahn jeweils eine Spule gewickelt ist, weniger Spulen benötigt werden, wird ein Herstellungsprozeß für die elektrische Maschine erheblich vereinfacht. Weiterhin werden dadurch auch in vorteilhafter Weise Herstellungskosten reduziert.

Im Lichte der vorliegenden Erfindung bezeichnet ein gewickelter Statorzahn, einen Statorzahn, um den Windungen einer Spule gewickelt sind. Das heißt also insbesondere, dass der gewickelte Statorzahn eine Spule aufweist. Die Statorzähne des Stators, um die jeweils Windungen von einer Spule gewickelt werden bzw. sind, können beispielsweise auch als Hauptstatorzähne bezeichnet werden.

Im Lichte der vorliegenden Erfindung bezeichnet ein ungewickelter Statorzahn, einen Statorzahn, um den keine Windungen einer Spule gewickelt sind. Der ungewickelte Statorzahn ist insofern frei von Windungen und somit insbesondere auch spulenlos. Das heißt insbesondere, dass der ungewickelte Statorzahn keine Spule aufweist. Der oder die Statorzähne, um die keine Windungen gewickelt werden bzw. sind nach Fertigstellung der elektrischen Maschine, können beispielsweise auch als Hilfsstatorzähne bezeichnet werden.

Nach einer Ausführungsform ist eine Breite der jeweils zwei gewickelten Statorzähne größer als eine Breite des ungewickelten Statorzahns. Das heißt also insbesondere, dass die Statorzähne, um die jeweils die Windungen gewickelt werden bzw. sind, eine größere Breite aufweisen als die Statorzähne, um die keine Windungen gewickelt werden. Also ist insbesondere die Breite des Hauptstatorzahns größer als die Breite des Hilfsstatorzahns. Dadurch wird in vorteilhafter Weise eine magnetomotorische Kraft (MMK), welche mittels einer elektrischen Bestromung der Spulen gebildet werden kann, erhöht, insbesondere um einen Faktor von 2 im Vergleich zum Stand der Technik, ohne dass die Zähne in Sättigung gelangen. Die Breite bezeichnet hier insbesondere die Länge, also seine Ausdehnung, in einer Richtung senkrecht zu der Längsachse des Statorzahns, wobei die Längsachse die Richtung des Statorzahns entlang seiner größten Ausdehnung bezeichnet. Die Breite des Hauptstatorzahns kann insbesondere mittels $B_{Haupt}$ abgekürzt werden. Die Breite des Hilfsstatorzahns kann insbesondere mittels $B_{Hilfs}$ abgekürzt werden.

Nach einer weiteren Ausführungsform kann vorgesehen sein, dass das Verhältnis Breite Hauptstatorzahn zu Breite Hilfsstatorzahn zwischen etwa 1,5 und etwa 2,5 liegt. Also ist insbesondere vorgesehen, dass $1,5 \leq B_{Haupt} / B_{Hilfs} \leq 2,5$ ist. Vorzugsweise ist $B_{Haupt} / B_{Hilfs} = 2$. Also ist insbesondere ein Hauptstatorzahn doppelt so breit wie ein Hilfsstatorzahn.

Aufgrund der größeren Breite der Hauptstatorzähne in Bezug auf die Hilfsstatorzähne decken die Hauptstatorzähne einen größeren Kreiswinkel ab als die Hilfsstatorzähne. Das bewirkt in vorteilhafter Weise eine Erhöhung eines magnetischen Flusses, welcher durch die Rotorpole, insbesondere durch die Permanentmagnete des Rotors, gebildet ist. Das bewirkt wiederum in vorteilhafter Weise eine Erhöhung eines mittleren Drehmoments, welches mittels der elektrischen Maschine bereitgestellt werden kann. Weiterhin bewirkt der größere Kreiswinkel der Hauptstatorzähne in vorteilhafter Weise auch eine größere Spulenweite, auf Englisch auch "coil pitch" genannt, der entsprechenden Spule des Hauptstatorzahns, was in vorteilhafter Weise einen Wicklungssehnungsfaktor $k_p$ der Spule erhöht. Der Wicklungssehnungsfaktor kann von etwa 0,940 (bekannte elektrische Maschine) auf etwa 1,0 (erfindungsgemäße elektrische Maschine) insbesondere bei entsprechender Wahl des Verhältnis $B_{Haupt}$ / $B_{Hilfs}$ erhöht werden, insbesondere indem ein Statorzahnschuhwinkel optimiert wird. Diese Erhöhung des Wicklungssehnungsfaktors um etwa 6,4% bewirkt in vorteilhafter Weise auch eine Erhöhung des mittleren Drehmoments um etwa 6,4%. Ein Statorzahnschuh im Sinne der vorliegenden Erfindung bezeichnet insbesondere einen verbreiterten Bereich des Statorzahns an einem Ende des Statorzahns, welches den Rotorpolen zugewandt ist.

Nach einer anderen Ausführungsform die nicht Teil der Erfindung ist kann auch vorgesehen sein, dass die Breite der Hauptstatorzähne gleich der Breite der Hilfsstatorzähne ist. Das heißt also insbesondere, dass $B_{Haupt} = B_{Hilfs}$ ist. Vorzugsweise sind die Hauptstatorzähne und die Hilfsstatorzähne gleich gebildet. Dadurch wird in vorteilhafter Weise bewirkt, dass die elektrische Maschine weniger Vibrationen und akustische Emissionen bei Betrieb aufweist.

Eine Windung im Sinne der vorliegenden Erfindung bezeichnet insbesondere einen Kreisdurchgang der Wicklung der Spule. Wenn beispielsweise für die Wicklung der Spule ein Spulendraht verwendet wird, so bedeutet eine Windungszahl von N, N eine natürliche Zahl, dass der Spulendraht N mal um den Statorzahn gewunden bzw. gewickelt wurde. Ein Winddungssinn bezeichnet insbesondere eine Wicklungsrichtung des Spulendrahtes, also beispielsweise in oder gegen den Uhrzeigersinn.

Gemäß einer Ausführungsform ist jede der Spulen einer Phasenwicklung, also einer Phase der Motorwicklung zugeordnet. Beispielsweise sind drei Phasen vorgesehen. Das heißt also insbesondere, dass jede der Spulen einer der drei Phasen zugeordnet ist. Durch das Zuordnen bzw. Gruppieren der Spulen zu einer gemeinsamen Phase werden in vorteilhafter Weise Oberwellen in dem aufgrund einer Bestromung der Spulen gebildeten Magnetfeld reduziert, was in vorteilhafter Weise insbesondere Drehmomentschwankungen und Verluste im Rotor erheblich reduziert.

In einer weiteren Ausführungsform werden die Spulen, die einer Phasenwicklung zugeordnet sind, in Reihe geschaltet. Dadurch wird insbesondere eine besonders einfache Gruppierung der Spulen für eine Phase bewirkt.

Ein Gruppieren im Sinne der vorliegenden Erfindung bedeutet insbesondere, dass die gruppierten Spulen einen gemeinsamen Stromkreis bilden. Die Spulengruppen bilden insofern jeweils von einander getrennte Stromkreise. In einer Spulengruppe müssen die Spulen in der Regel in Reihe geschaltet sein. Vorzugsweise können die Spulen einer Spulengruppe mehrere, insbesondere zwei, parallel zu einander geschaltete Reihenschaltungen bilden. Das heißt also insbesondere, dass Untermengen der Spulen einer Spulengruppe in Reihe geschaltet werden.

In einer Ausführungsform können die Phasen als Sternpunktschaltung oder als Deltaschaltung miteinander geschaltet sein. Eine Deltaschaltung kann auch als eine Dreiecksschaltung bezeichnet werden. Das heißt also insbesondere, dass die Phasen in einer Stern- oder einer Deltaschaltung miteinander verbunden sind.

Nach einer weiteren Ausführungsform weisen die Spulen jeweils alternierend einen entgegen gesetzten Windungssinn auf. Das heißt also insbesondere, dass nach einer Spule mit einem bestimmten Windungssinn eine Spule folgt, welche einen dem bestimmten Winddungssinn entgegen gesetzten Windungssinn aufweist. Vorzugsweise sind drei Spulen einer Phase zugeordnet. Das heißt dann in diesem Fall insbesondere, dass beispielsweise die erste und die dritte Spule einen gleichen Wicklungssinn aufweisen, wobei die der ersten Spule folgende zweite bzw. mittlere Spule, also die Spule, die zwischen der ersten und der dritten Spule angeordnet ist, einen diesem Wicklungssinn entgegen gesetzten Wicklungssinn aufweist. Das bewirkt in vorteilhafter Weise, dass die mittlere Spule bei Stromfluss einen magnetischen Fluss mit einer entgegen gesetzten Polarität bildet relativ zu einer Polarität eines magnetischen Flusses, welcher bei Stromfluss mittels der ersten und der zweiten Spule gebildet wird. Die entsprechenden magnetischen Flussverkettungen heben sich somit gerade nicht auf, so dass ein Drehmoment ausgebildet werden kann. Dies soll im Folgenden näher erläutert werden.

Die magnetische Flussverkettung ist insbesondere proportional zu dem Produkt aus magnetischen Fluss und N, Windungszahl, wobei hier noch das Vorzeichen plus oder minus abhängig von dem Windungssinn berücksichtigt werden muss. Die erste Spule weist beispielsweise aufgrund der Stromrichtung, welche sich aus dem Windungssinn ergibt, einen magnetischen Fluss M auf, welcher radial nach Außen zeigt. Die Flussverkettung wäre dann hier

$$F_{1. Spule} = + M * +N.$$

Die zweite Spule weist aufgrund der Stromrichtung einen magnetischen Fluss -M auf, welcher radial nach Innen zeigt. Die Flussverkettung beträgt dann

$$F_{2.\,Spule} = -M * -N = M * N = F_{1.\,Spule}.$$

Analog folgen die Berechnungen für die 3. Spule. Die drei entsprechenden Flussverkettungen sind somit gleich und heben sich nicht gegenseitig auf.

Die obigen Berechnungen im Zusammenhang mit drei Spulen gelten analog für eine beliebige Anzahl an Spulen, so dass das Vorsehen von alternierenden Wicklungssinnen in vorteilhafter Weise jeweils gleiche Flussverkettungen bewirkt, die sich insofern nicht aufheben.

Nach einer anderen Ausführungsform umfasst die elektrische Maschine 18 Statorzähne. Um 9 der 18 Statorzähne ist vorzugsweise jeweils eine Spule gewickelt. Insbesondere sind jeweils drei der 9 Spulen einer Phase zugeordnet. Die elektrische Maschine ist also insbesondere als eine dreiphasige elektrische Maschine gebildet. Insbesondere umfasst die elektrische Maschine 14 Rotorpole.

Gemäß einer Ausführungsform kann die Wicklung einer Spule als einlagige Wicklung ausgebildet sein. Das heißt also insbesondere, dass von den jeweiligen beiden gegenüberliegenden Seiten eines Hauptstatorzahns und eines Hilfsstatorzahns nur an der Seite des Hauptstatorzahns die Wicklungen der Spule vorgesehen sind. Die Seite des Hilfsstatorzahns ist frei von Wicklungen der Spule. In dem Zwischenraum zwischen dem Hauptstatorzahn und dem Hilfsstatorzahn ist somit teilweise nur eine Wicklung einer Spule gebildet. Daher die Bezeichnung als einlagige Wicklung im Gegensatz zu einer zweilagigen Wicklung, wo sowohl der Hauptstatorzahn und der Hilfsstatorzahn mit Wicklungen einer Spule versehen sind, so dass beide gegenüberliegenden Seiten Abschnitte von Wicklungen der Spulen aufweisen.

Gemäß einer weiteren Ausführungsform liegt ein Verhältnis Anzahl der Statorzähne zu Anzahl der Rotorpole zwischen etwa 0,7 und etwa 1,5. Dadurch wird eine besonders fehlertolerante elektrische Maschinen geschaffen. Insbesondere bei 18 Statorzähnen und 14 Rotorpolen beträgt das entsprechende Verhältnis 18/14 ≈ 1,29.

Nach einer anderen Ausführungsform kann eine Schrägung (auf Englisch: "skew"), insbesondere eine gestufte (auf Englisch: "stepped") Schrägung, in dem Rotor gebildet sein. Dadurch werden in vorteilhafter Weise Drehmomentschwankungen verringert. Das heißt insbesondere, dass der Rotor Bereiche mit einem unterschiedlichen Anstellwinkel aufweist.

In einer anderen Ausführungsform ist jede Phase mit einem Stromrichter verbunden.

Die Erfindung wird im Folgenden anhand von bevorzugten Ausführungsbeispielen unter Bezugnahme auf Figuren näher erläutert. Hierbei zeigen:

Fig. 1      eine Schnittansicht einer elektrischen Maschine nach dem Stand der Technik mit gewickelten Spulen, welche einer von drei Phasen zugeordnet sind,

Fig. 2      eine Schnittansicht der elektrischen Maschine aus Fig. 1, wobei die gewickelten Spulen der beiden anderen Phasen zusätzlich gezeigt sind,

Fig. 3      eine Schnittansicht einer erfindungsgemäßen elektrischen Maschine mit gewickelten Spulen, welche einer von drei Phasen zugeordnet sind,

Fig. 4      eine Schnittansicht der elektrischen Maschine aus Fig. 3, wobei die gewickelten Spulen der beiden anderen Phasen zusätzlich gezeigt sind,

Fig. 5      eine schematische Ansicht einer Zusammenschaltung der Spulen der elektrischen Maschine aus Fig. 4,

Fig. 6      eine vergrößerte Schnittansicht von Statorzähnen,

Fig. 7      eine Schnittansicht einer weiteren elektrischen Maschine die nicht Teil der Erfindung ist.

Fig. 8      einen Vergleich zwischen einem jeweiligen Zeigerdiagramm für die von einer einzelnen Phase gebildete elektromotorische Kraft in einer bekannten elektrischen Maschine und einer erfindungsgemäßen elektrischen Maschine und

Fig. 9      einen graphischen Verlauf eines Drehmoments in Abhängigkeit eines Rotordrehwinkels.

Im Folgenden werden für gleiche Merkmale gleiche Bezugszeichen verwendet.

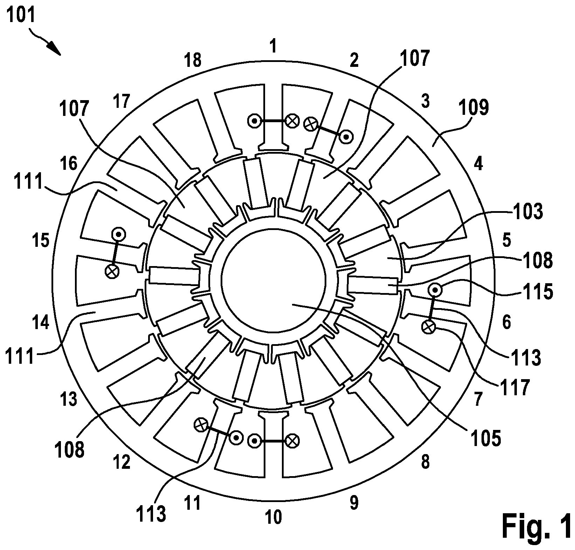

Fig. 1 zeigt eine Schnittansicht einer elektrischen Maschine 101 nach dem Stand der Technik. Die elektrische Maschine 101 ist als eine Synchronmaschine gebildet. Sie umfasst einen Rotor 103, welcher drehbar mittels einer Welle 105 gelagert ist. Der Rotor 103 umfasst 14 Rotorpole 107, welche mittels Permanentmagnete 108 gebildet sind.

Die Synchronmaschine 101 umfasst ferner einen Stator 109, welcher 18 Statorzähne 111 aufweist. Hierbei sind die Statorzähne 111 radial nach innen in Richtung der Welle 105 gerichtet und sind den Rotorpolen 107 zugewandt angeordnet. Die 18 Statorzähne 111 sind von 1 bis 18 durchnummeriert, wobei die entsprechende Nummerierung der Übersicht halber außen am Stator 109 eingezeichnet ist.

Um den ersten, zweiten, sechsten, zehnten, elften und fünfzehnten Statorzahn 111 ist jeweils eine Spule 113 gewickelt. Eine Wicklungsrichtung der Spulen 113 ist mittels zwei graphischen Elementen mit den Bezugszeichen 115 und 117 gekennzeichnet, wobei das Element mit dem Bezugszeichen 117 anzeigt, dass hier die Wicklung der Spule 113 in die Papierebene eintaucht. Das Element mit dem Bezugszeichen 115 zeigt an, dass die Wicklung der Spule 113 aus der Papierebene heraus kommt.

Der Einfachheit halber kann eine Spule an Statorzahnposition "X", auch als Spule "X" bezeichnet werden, wobei X der entsprechenden Nummerierung entspricht.

Die in Fig. 1 eingezeichneten Spulen 113 sind einer Phase einer Dreiphasen-Wicklung zugeordnet und in zwei gemeinsame Spulengruppen gruppiert. 1. Gruppe: Spulen 1, 2, 6; 2. Gruppe : Spulen 10, 11, 15. Die Spulen 113 weisen eine gleiche Windungszahl auf, d. h. also insbesondere, dass die Spulen 113 eine gleiche Anzahl an Windungen aufweisen.

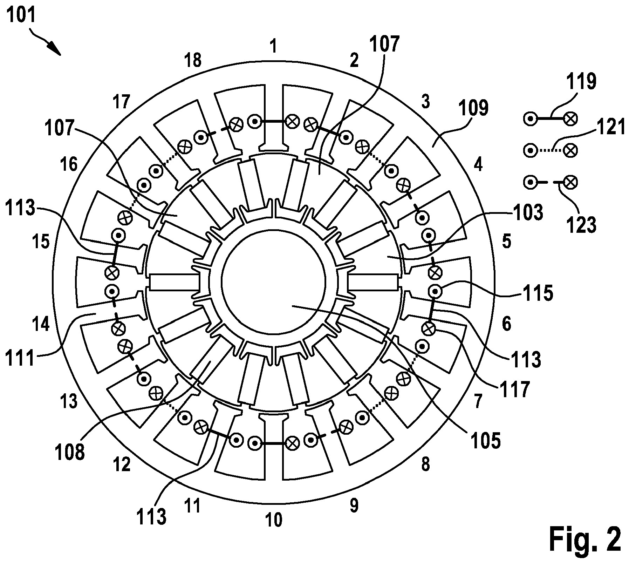

Fig. 2 zeigt die Synchronmaschine 101 aus Fig. 1, wobei hier nun weitere Spulen 113 um die entsprechenden Statorzähne 111 gewickelt sind. Hierbei ist jeweils eine Spule 113 um einen Statorzahn 111 gewickelt. Um alle 18 Statorzähne 111 ist also jeweils eine Spule 113 gewickelt. Es werden jeweils sechs Spulen 113 zu einer gemeinsamen Phase analog zu Fig. 1 gruppiert und entsprechend den beiden anderen Phasen der Wicklung zugeordnet. Zur besseren Unterscheidung ist in Fig. 2 rechts neben der elektrischen Maschine 101 eine Legende eingezeichnet, welche drei Symbole 119, 121 und 123 für Spulen 113 der jeweils gleichen Phase zeigt. Hierbei kennzeichnet das Symbol 119 die erste Phase der Wicklung, die auch als Phase A bezeichnet werden kann. Das Symbol 121 kennzeichnet die Spulen 113, welche der zweiten Phase der Wicklung zugeordnet sind, wobei die zweite Phase auch als Phase B bezeichnet werden kann. Entsprechend kennzeichnet das Symbol 123 die Spulen 113, welche der dritten Phase, auch als Phase C bezeichnet, der Wicklung zugeordnet sind.

Auch die Spulen der Phase B respektive C, weisen alle eine gleiche Windungszahl auf, nämlich die Windungszahl der Spulen der Phase A. Das heißt also insbesondere, dass sämtliche 18 Spulen der Synchronmaschine 101 eine gleiche Windungszahl aufweisen.

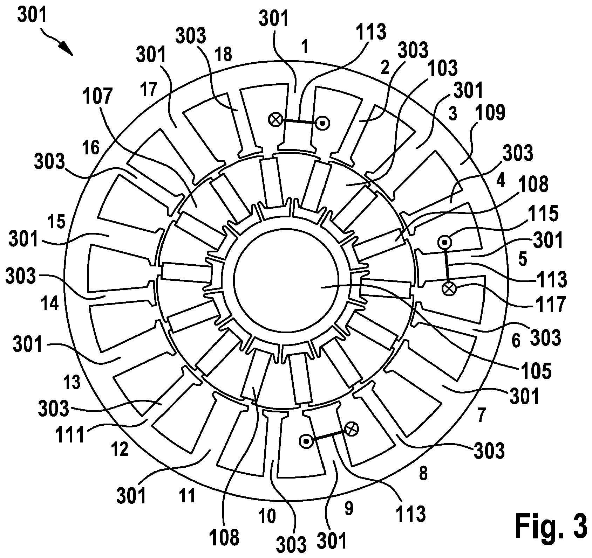

Fig. 3 zeigt eine erfindungsgemäße elektrische Maschine 301, welche als Synchronmaschine gebildet ist. Die Synchronmaschine 301 ist im Wesentlichen analog zu der Synchronmaschine 101 in Fig. 1 aufgebaut bis auf die Spulentopologie und die Ausbildung der Statorzähne 111. Es kann insofern auf die diesbezüglichen Ausführungen verwiesen werden. Ferner werden der Übersicht halber für gleiche Merkmale gleiche Bezugszeichen verwendet.

Ein Unterschied zu der Synchronmaschine 101 nach dem Stand der Technik gemäß Fig. 1 und Fig. 2 besteht insbesondere darin, dass 9 Statorzähne 111 des Stators 109 breiter sind als die 9 übrigen Statorzähne 111 des Stators 109. Die 9 breiteren Statorzähne 111 werden zur besseren Unterscheidbarkeit mit dem Bezugszeichen 301 gekennzeichnet und im Folgenden insbesondere auch als Hauptstatorzähne bezeichnet. Die Hauptstatorzähne 301 sind insbesondere gleich gebildet.

Die 9 übrigen Statorzähne 111 des Stators 109 werden zur besseren Unterscheidbarkeit mit dem Bezugszeichen 303 gekennzeichnet und im Folgenden insbesondere auch als Hilfsstatorzähne gekennzeichnet. Die Hilfsstatorzähne 303 sind insbesondere gleich gebildet.

Die 9 Hauptstatorzähne 301 entsprechen der Statorzahnposition 1, 3, 5, 7, 9, 11, 13, 15 und 17. Die 9 Hilfsstatorzähne 303 entsprechen der Statorzahnposition 2, 4, 6, 8, 10, 12, 14, 16 und 18. Das heißt also insbesondere, dass die Hilfsstatorzähne 303 und die Hauptstatorzähne 301 alternierend vorgesehen sind. Einem Hauptstatorzahn 301 folgt ein Hilfsstatorzahn 303, dem wiederum ein Hauptstatorzahn 301 und so weiter folgt. Somit ist zwischen zwei Hauptstatorzähnen 301 ein Hilfsstatorzahn 303 angeordnet bzw. zwischen zwei Hilfsstatorzähnen 303 ist ein Hauptstatorzahn 301 angeordnet.

Ein weiterer Unterschied zu der Synchronmaschine 101 nach dem Stand der Technik gemäß Fig. 1 und Fig. 2 besteht insbesondere auch darin, dass die erfindungsgemäße Synchronmaschine 301 pro Phase drei Spulen 113 aufweist. In Fig. 3 sind zunächst nur die drei Spulen 113 für die erste Phase, Phase A, der Wicklung eingezeichnet. Die Spulen 113 der Phase A bilden insofern eine Spulengruppe: Spulen 1, 5, 9. Die Spulen 113 der Phase A sind respektive auf den Hauptstatorzähnen 301 an Statorzahnposition 1, 5 und 9 angeordnet. Die Spulen an Statorzahnposition 1 und 9 weisen einen dem Windungssinn der Spule an Statorzahnposition 5 entgegen gesetzten Windungssinn auf.

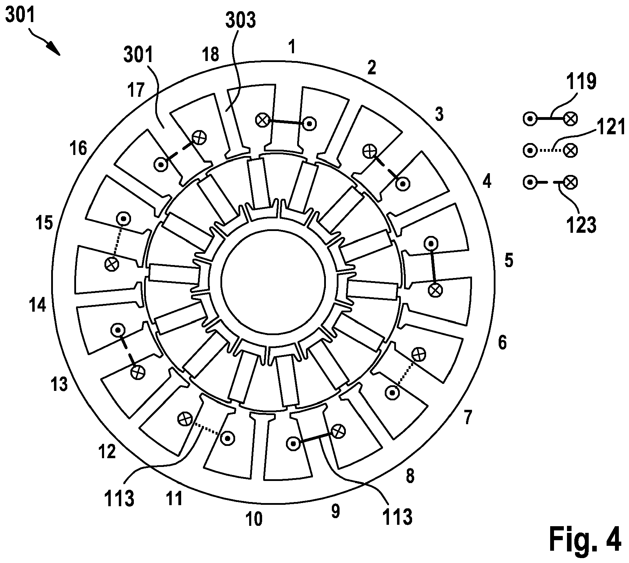

Fig. 4 zeigt die Synchronmaschine 301 aus Fig. 3 mit weiteren gewickelten Spulen 113, welche den beiden anderen Phasen, Phasen B und C, der Wicklung zugeordnet sind. Der Übersicht halber sind in Fig. 4 nicht sämtliche Bezugszeichen für die einzelnen Elemente eingezeichnet. Um die einzelnen Spulen 113 der drei Phasen A, B und C besser unterscheiden zu können, ist rechts von der Synchronmaschine 301 eine Legende analog zu Fig. 2 eingezeichnet.

Auch die jeweiligen drei Spulen 113 der Phasen B und C sind um Hauptstatorzähnen 301 gewickelt. Die drei Spulen 113 der Phase B sind um die Hauptstatorzähne 301 an Statorzahnposition 7, 11 und 15 gewickelt. Die drei Spulen 113 der Phase C sind um die Hauptstatorzähne 301 an Statorzahnposition 3, 13 und 17 gewickelt. Die Spulen an Statorzahnposition 7 und 15 weisen einen dem Windungssinn der Spule an Statorzahnposition 11 entgegen gesetzten Windungssinn auf. Die Spulen an Statorzahnposition 3 und 13 weisen einen dem Windungssinn der Spule an Statorzahnposition 17 entgegen gesetzten Windungssinn auf.

Um die Hilfsstatorzähne 303 sind keine Spulen gewickelt. Die Hilfsstatorzähne 303 sind insofern spulenlos.

Somit ist also immer zwischen zwei Spulen 113 ein Statorzahn 111 angeordnet, um welchen keine Spule gewickelt ist.

Die Spulen 113 der elektrischen Maschine 301 gemäß Fig. 3 und 4 können die gleiche oder die doppelte Windungszahl aufweisen im Vergleich zu der bekannten elektrischen Maschine 101 gemäß Fig. 1 und 2.

Es kann vorzugsweise vorgesehen sein, dass die drei Phasen A, B und C in einer Stern- oder einer Dreiecksschaltung miteinander verbunden sind.

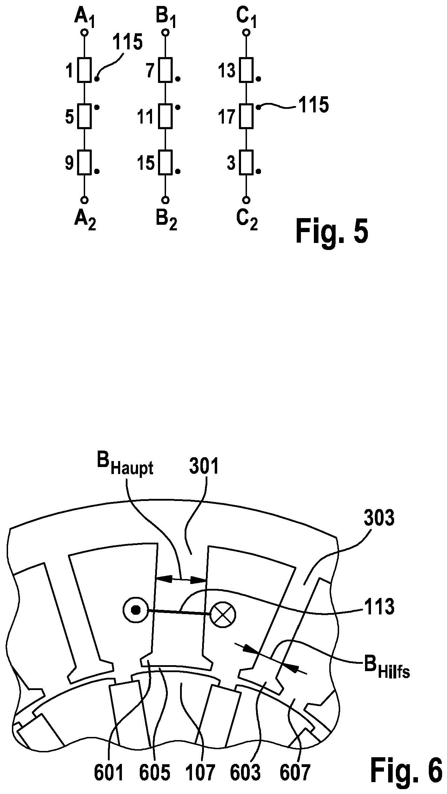

Fig. 5 zeigt eine schematische Ansicht einer jeweiligen Schaltung der Spulen der gleichen Phase der elektrischen Maschine 301 aus Fig. 3 und 4. Die jeweiligen Spulen einer Spulengruppe sind in Reihe geschaltet. A1 und A2, B1 und B2 sowie C1 und C2 kennzeichnen respektive elektrische Anschlüsse der Reihenschaltungen, wobei A, B und C den drei Phasen entsprechen. Die Nummerierungen 1 bis 17 in den drei Reihenschaltungen beziehen sich auf die entsprechende Statorzahnposition.

Der neben den Spulen eingezeichnete Punkt, wird hier analog zu den bisherigen Figuren mit dem Bezugszeichen 115 gekennzeichnet, da an dieser Stelle die Wicklung der entsprechenden Spule aus der Papierebene austritt, so dass ein Richtungswicklung der Spulenwicklung klargestellt ist.

Die Phase A umfasst eine Spulengruppe umfassend die in Reihe geschalteten Spulen 113 an Statorzahnpositionen 1, 5 und 9.

Die Phase B umfasst eine Spulengruppe umfassend die in Reihe geschalteten Spulen 113 an Statorzahnpositionen 7, 11 und 15.

Die Phase C umfasst eine Spulengruppe umfassend die in Reihe geschalteten Spulen 113 an Statorzahnpositionen 13, 17 und 3.

Fig. 6 zeigt eine vergrößerte Schnittansicht eines Hauptstatorzahns 301 mit einer gewickelten Spule 113 und eines Hilfsstatorzahns 303 der elektrischen Maschine 301 gemäß Fig. 3 und 4. Beide Statorzähne weisen an ihrem den Rotorpolen 107 zugewandten Bereich einen verbreiterten Abschnitt 601 respektive 603 auf, welche auch als ein Hauptstatorzahnschuh respektive Hilfsstatorzahnschuh bezeichnet werden kann. Eine Breite des Hauptstatorzahns 301 ist in Fig. 6 mit $B_{Haupt}$ gekennzeichnet. Eine Breite des Hilfsstatorzahns 303 ist in Fig. 6 mit $B_{Hilfs}$ gekennzeichnet.

Deutlich zu erkennen ist, dass $B_{Haupt} > B_{Hilfs}$ ist. Auch der Hauptstatorzahnschuh 601 ist breiter als der Hilfsstatorzahnschuh 603. Insbesondere ist der Hauptstatorzahn 301 doppelt so breit wie der Hilfsstatorzahn 303.

Ein Luftspalt zwischen den Statorzähnen und den Rotorpolen 107 ist mit dem Bezugszeichen 605 gekennzeichnet. Eine Schlitzöffnung zwischen den Statorzähnen, also die Statornut, ist mit dem Bezugszeichen 607 gekennzeichnet.

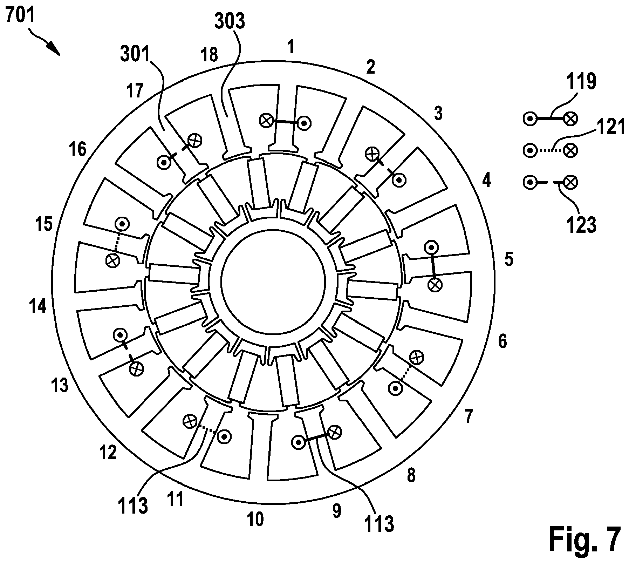

Fig. 7 zeigt eine Schnittansicht einer weiteren elektrischen Maschine 701 die nicht Teil der Erfindung ist. Die elektrische Maschine 701 in Fig. 7 ist im Wesentlichen analog zu der elektrischen Maschine 301 gemäß Fig. 3 und 4 aufgebaut. Auf die diesbezüglichen Ausführungen kann daher verwiesen werden. Ferner sind der Übersicht halber nicht sämtliche Bezugszeichen eingezeichnet.

Ein Unterschied besteht insbesondere darin, dass die Hauptstatorzähne 301 und die Hilfsstatorzähne 303 gleich gebildet sind. Sie weisen also insbesondere die gleiche Breite auf. Dadurch werden in vorteilhafter Weise Vibrationen und akustische Emissionen verringert.

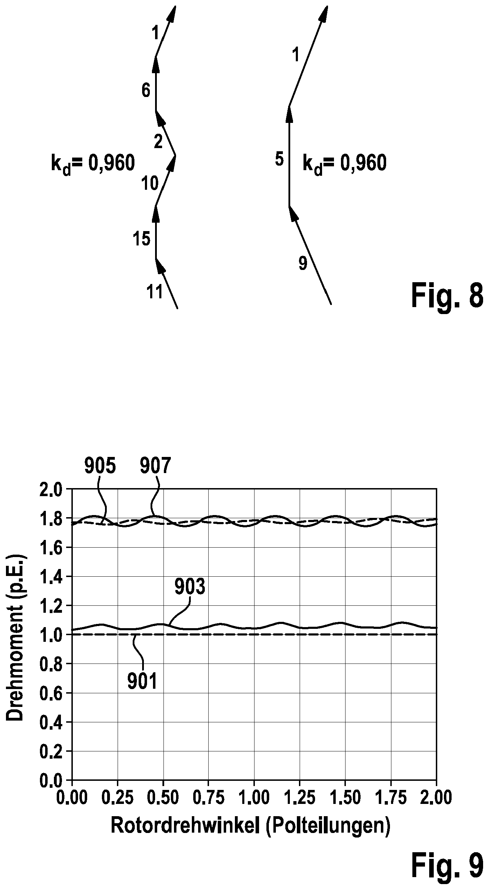

Fig. 8 zeigt jeweils ein Zeigerdiagramm für die von der Phase A der Wicklung gebildeten elektromotorischen Kraft (EMK), also die einzelnen EMK-Vektoren, in einer Phase der Wicklung der elektrischen Maschine gemäß dem Stand der Technik (links) und gemäß eines erfindungsgemäßen Aufbaus der Wicklung (rechts), also mit einem ungewickelten Statorzahn zwischen zwei gewickelten Statorzähnen. Die Windungszahl in den erfindungsgemäßen Spulen in Fig. 5 beträgt die doppelte bzw. die gleiche Windungszahl der bekannten Spulen. Der Faktor $k_d$ der Wicklungsverteilung (auch Zonenfaktor genannt) gemäß dem Stand der Technik beträgt 0,960 (100 %) und der Zonenfaktor bzw. Wicklungsverteilungsfaktor gemäß der Erfindung beträgt auch 0,960 (100 %). Dies zeigt in vorteilhafter Weise, dass in der erfindungsgemäßen elektrischen Maschine im Vergleich zum Stand der Technik keine Verringerung bei dem Zonenfaktor $k_d$ der Wicklung bzw. Wicklungsverteilungsfaktor besteht. Insofern ist auch ein Drehmoment in vorteilhafter Weise trotz der Einsparung an Spulen nicht verringert.

Fig. 9 zeigt einen Verlauf eines Drehmoments pro Einheit (p. E.) über einen Drehwinkel des Rotors von zwei Polteilungen.

Hierbei kennzeichnet das Bezugszeichen 901 den entsprechenden Verlauf (gestrichelte Kurve) in einer bekannten elektrischen Maschine bei Bestromung mittels eines sinusförmigen Dreiphasenstroms mit einem Spitzenwert $I_{pk}$ (Bemessungswert). Das Bezugszeichen 903 kennzeichnet einen entsprechenden Verlauf (durchzogene Kurve) in einer erfindungsgemäßen elektrischen Maschine bei Bestromung mittels des gleichen sinusförmigen Dreiphasenstroms mit dem Spitzenwert $I_{pk}$.

Das Bezugszeichen 905 kennzeichnet den entsprechenden Verlauf (gestrichelte Kurve) in einer bekannten elektrischen Maschine bei Bestromung mittels eines sinusförmigen Dreiphasenstroms mit einem Spitzenwert $2*I_{pk}$ (Bemessungswert). Das Bezugszeichen 907 kennzeichnet einen entsprechenden Verlauf (durchzogene Kurve) in einer erfindungsgemäßen elektrischen Maschine bei Bestromung mittels des gleichen sinusförmigen Dreiphasenstroms mit dem Spitzenwert $2*I_{pk}$.

Bezüglich aller vier Kurven weisen die elektrischen Maschinen eine gleiche Nutfläche und einen gleichen Nutfüllfaktor auf. Die Kurven 903, 905 und 907 wurden auf den Mittelwert der Kurve 901 normiert.

Die erfindungsgemäße elektrische Maschine weist im Vergleich zum Stand der Technik eine Erhöhung des durchschnittlichen Drehmoments bei Bestromung $I_{pk}$ um 5,9 % auf. Dies bedeutet insbesondere, dass der Wicklungssehnungsfaktor $k_p$ der Wicklung aufgrund des breiteren Hauptstatorzahnschuhs 601 von 0.940 (Stand der Technik) auf 0.995 (Erfindung) gestiegen ist. Bei zweifachem Bemessungsstrom weist die Erfindung im Vergleich zum Stand der Technik eine Erhöhung des durchschnittlichen Drehmoments um 0,6 % auf. Dies ist auf die Sättigung im Statorschichtstapel zurückzuführen.

Die erfindungsgemäße elektrische Maschine erfüllt viele der Anforderungen für den Einsatz in fehlertoleranten Antrieben wie zum Beispiel:

- Die Anzahl der Statornuten, also der Zwischenraum zwischen den Statorzähnen, pro Pol beträgt zwischen 0,7 und 1,5 (18 Statornuten geteilt durch 14 Rotorpole ≈ 1,29);
- Die Spulen sind um wechselnde bzw. alternierende Zähne des Stators gewickelt, so dass die Spulen einer bestimmten Phase räumlich und thermisch getrennt und magnetisch von denen anderer Phasen entkoppelt sind;
- Durch den Einsatz kleinerer und tieferer Nutöffnungen zwischen den Statorzähnen kann eine phasensynchrone Reaktanz so eingestellt sein, dass sie 1,0 p. E. beträgt, so dass der Kurzschlussstrom, der unter Einphasen-Fehlerbedingungen fließt, nicht größer ist als der Bemessungsphasenstrom.

In einer nicht gezeigten Ausführungsform kann insbesondere vorgesehen sein, dass jede Phase der Maschine mit einem separaten Stromrichter, insbesondere mit einem Einphasen-Stromrichter, vorzugsweise ein H-Brücken PWM (Pulsweitenmodulation)-Wandler) getrieben werden.

Wenn jede Phase der Maschine mit einem separaten Gleichstromwandler verbunden ist, erfüllt der Antrieb umfassend eine erfindungsgemäße elektrische Maschine die Anforderungen für einen fehlertoleranten Antrieb. Und das insbesondere auch, wenn nur drei Phasen vorgesehen sind.

Die obigen Ausführungen sollen sich nicht nur auf eine dreiphasige Synchronmaschine mit 18 Statorzähnen und 14 Rotorpolen beschränken. Es können auch mehr oder weniger als 18 Statorzähne und/oder mehr oder weniger als 14 Rotorpole vorgesehen sein.

Zusammenfassend umfasst also die Erfindung insbesondere den Gedanken, zwischen zwei Statorzähnen, um die jeweils Wicklungen einer Spule gewickelt sind, einen Statorzahn vorzusehen, um den keine Wicklungen einer Spule gewickelt werden bzw. sind. Zum einen wird dadurch ein Herstellungsprozeß vereinfacht. Des Weiteren erhöht sich in vorteilhafter Weise auch ein mittleres Drehmoment für einen bestimmten Strom aufgrund der Erhöhung des Wicklungssehnungsfaktors der Spulen der Wicklung.

**Patentansprüche**

1. Elektrische Maschine (301), mit:

   - einem drehbar gelagerten Rotor (103) mit mehreren Rotorpolen (107),
   - einem Stator (109) mit mehreren den Rotorpolen (107) zugewandt angeordneten Statorzähnen (301, 303),

wobei
   - zwischen zwei Statorzähnen (301), die jeweils einzeln mit Windungen von zumindest einer Spule (113) bewickelt sind, ein ungewickelter Statorzahn (303) vorgesehen ist, und wo bei jede der Spulen (113) einer Phase zugeordnet ist, **dadurch gekennzeichnet, dass** jede Phase mit einem separaten Einphasen-Stromrichter verbunden ist;
   wobei eine Breite der zwei gewickelten Statorzähne (301) größer ist als eine Breite des ungewickelten Statorzahns (303),
   wobei ein Verhältnis der Breite eines gewickelten Statorzahns (301) zu der Breite des ungewickelten Statorzahns (303) größer gleich 1,5 und kleiner gleich 2,5 ist.

2. Elektrische Maschine (301) nach Anspruch 1, wobei ein Verhältnis der Breite eines gewickelten Statorzahns (301) zu der Breite des ungewickelten Statorzahns (303) gleich 2 ist.

3. Elektrische Maschine nach Anspruch 1 oder 2, wobei die Spulen (113) einer Phase jeweils alternierend einen entgegen gesetzten Windungssinn aufweisen.

4. Elektrische Maschine nach Anspruch 1 oder 3, wobei die Spulen (113) einer Phase in Reihe geschaltet sind.

5. Elektrische Maschine (301) nach einem der Ansprüche 1 oder 3 bis 4, wobei die Phasen in einer Stern- oder einer Deltaschaltung miteinander verbunden sind.

6. Elektrische Maschine (301) nach einem der Ansprüche 1 oder 3 bis 5, wobei ein Verhältnis Anzahl der Statorzähne (301, 303) zu Anzahl der Rotorpole (107) zwischen etwa 0,7 und etwa 1,5 beträgt.

7. Elektrische Maschine nach einem der vorherigen Ansprüche, wobei ein Verhältnis Anzahl der Statorzähne (301, 303) zu Anzahl der Rotorpole (107) 9/7 beträgt.

8. Elektrische Maschine (301) nach einem der vorherigen Ansprüche, wobei 18 Statorzähne (301, 303) gebildet sind, wobei um 9 (301) der 18 Statorzähne (301, 303) jeweils eine Spule (113) gewickelt ist und wobei jeweils drei der 9 gewickelten Spulen einer Phase zugeordnet sind.

**Claims**

1. Electrical machine (301), comprising:

- a rotatably mounted rotor (103) with a plurality of rotor poles (107),
- a stator (109) with a plurality of stator teeth (301, 303) which are arranged so as to face the rotor poles (107),
wherein
- a non-wound stator tooth (303) is provided between two stator teeth (301) which are each individually wound with turns of at least one coil (113), and
wherein each of the coils (113) is associated with a phase,
**characterized in that**
each phase is connected to a separate single-phase converter;
wherein a width of the two wound stator teeth (301) is greater than a width of the non-wound stator tooth (303), wherein a ratio of the width of a wound stator tooth (301) to the width of the non-wound stator tooth (303) is greater than or equal to 1.5 and less than or equal to 2.5.

2. Electrical machine (301) according to Claim 1, wherein a ratio of the width of a wound stator tooth (301) to the width of the non-wound stator tooth (303) is equal to 2.

3. Electrical machine according to Claim 1 or 2, wherein the coils (113) of a phase have an opposite winding sense in a respectively alternating manner.

4. Electrical machine according to Claim 1 or 3, wherein the coils (113) of a phase are connected in series.

5. Electrical machine (301) according to one of Claims 1 or 3 and 4, wherein the phases are connected to one another in star or in delta.

6. Electrical machine (301) according to one of Claims 1 or 3 to 5, wherein a ratio of the number of stator teeth (301, 303) to the number of rotor poles (107) is between approximately 0.7 and approximately 1.5.

7. Electrical machine according to one of the preceding claims, wherein a ratio of the number of stator teeth (301, 303) to the number of rotor poles (107) is 9/7.

8. Electrical machine (301) according to one of the preceding claims, wherein 18 stator teeth (301, 303) are formed, wherein in each case one coil (113) is wound around 9 (301) of the 18 stator teeth (301, 303), and wherein in each case three of the 9 wound coils are associated with a phase.

**Revendications**

1. Machine électrique (301), comportant :

- un rotor (103) monté à rotation et comportant une pluralité de pôles de rotor (107),
- un stator (109) comportant une pluralité de dents de stator (301, 303) disposées en face des pôles de rotor (107), dans laquelle
- une dent de stator non bobinée (303) est prévue entre deux dents de stator (301) qui sont respectivement bobinées avec des spires d'au moins une bobine (113), et dans laquelle chacune des bobines (113) est associée à une phase,
**caractérisée en ce que** chaque phase est connectée à un convertisseur de courant monophasé séparé ;
dans laquelle une largeur des deux dents de stator bobinées (301) est supérieure à une largeur de la dent de stator non bobinée (303),
dans laquelle le rapport de la largeur d'une dent de stator bobinée (301) à la largeur de la dent de stator non bobinée (303) est supérieur ou égal à 1,5 et inférieur ou égal à 2,5.

2. Machine électrique (301) selon la revendication 1, dans laquelle un rapport de la largeur d'une dent de stator bobinée (301) à la largeur de la dent de stator non bobinée (303) est égal à 2.

3. Machine électrique selon la revendication 1 ou 2, dans laquelle les bobines (113) d'une phase présentent alternativement un sens d'enroulement opposé.

4. Machine électrique selon la revendication 1 ou 3, dans laquelle les bobines (113) d'une phase sont connectées en série.

5. Machine électrique (301) selon l'une des revendications 1 ou 3 à 4, dans laquelle les phases sont reliées les unes aux autres en étoile ou en triangle.

6. Machine électrique (301) selon l'une des revendications 1 ou 3 à 5, dans laquelle le rapport du nombre de dents de stator (301, 303) au nombre de pôles de rotor (107) est compris entre environ 0,7 et environ 1,5.

7. Machine électrique selon l'une des revendications précédentes, dans laquelle le rapport du nombre de dents de stator (301, 303) au nombre de pôles de rotor (107) est de 9/7.

8. Machine électrique (301) selon l'une des revendications précédentes, dans laquelle 18 dents de stator (301, 303) sont formées, dans laquelle une bobine (113) est respectivement enroulée autour de 9 (301) des 18 dents de stator (301, 303) et dans laquelle trois des 9 bobines enroulées sont associées à chaque phase.

**Fig. 1**

Fig. 2

Fig. 3

Fig. 4

**Fig. 5**

**Fig. 6**

Fig. 7

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009002928 A1
- DE 102009029065 A1
- DE 102005039176 A1
- DE 19905748 A1
- DE 102007029157 A1
- JP 2006296033 A
- WO 2011029235 A1
- DE 2426968 A1